(19) Europäisches Patentamt
European Patent Office
Office européen des brevets

(11) **EP 3 974 054 A1**

(12) **EUROPEAN PATENT APPLICATION**
published in accordance with Art. 153(4) EPC

(43) Date of publication:
**30.03.2022  Bulletin 2022/13**

(51) Int Cl.:
**B01J 13/04** *(2006.01)*     **B01F 17/00** *(2006.01)*

(21) Application number: **20919360.6**

(22) Date of filing: **29.10.2020**

(86) International application number:
**PCT/KR2020/014882**

(87) International publication number:
**WO 2022/034970 (17.02.2022 Gazette 2022/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.08.2020  KR 20200100557**

(71) Applicant: **Biogenics, Inc.
Daejon 34036 (KR)**

(72) Inventor: **The designation of the inventor has not yet been filed**

(74) Representative: **Müller-Boré & Partner
Patentanwälte PartG mbB
Friedenheimer Brücke 21
80639 München (DE)**

(54) **METHOD FOR MANUFACTURING FRAGRANCE OIL-CONTAINING MICROCAPSULES, FRAGRANCE OIL-CONTAINING MICROCAPSULES MANUFACTURED USING SAME METHOD, AND DISPERSION COMPRISING SAME**

(57)     The present invention relates to a a method for manufacturing a microcapsule including a fragrance oil, a microcapsule containing a fragrance oil manufactured by the manufacturing method, and a dispersion including the same. In the method for manufacturing a microcapsule including the fragrance oil, there is provided a fragrance oil-containing microcapsule which has an increased distribution of individual primary particles because the aggregation of the primary particles is suppressed even when the microcapsule is manufactured in a large quantity, has a uniform particle shape and excellent surface characteristics, shows an excellent strain recovery capability with respect to external pressure due to the high yield stress, and enables a stable support of the fragrance oil because the collapse of the microcapsule is suppressed. Also, there are provided a fragrance oil-containing microcapsule and a dispersion including the same, wherein the fragrance oil-containing microcapsule shows an excellent long-term fragrance diffusion-lasting property of the fragrance oil and has controlled release characteristics with respect to the fragrance oil.

【FIG. 1】

**Description**

[Technical Field]

The present invention relates to a method for manufacturing a microcapsule including a fragrance oil, a microcapsule including a fragrance oil manufactured by the method, and a dispersion including the same.

[Background Art]

Microcapsules have been widely used in various fields of applications such as coloring agents, catalysts, adhesives, Fragrances, fuels, agricultural pesticides, biomaterials, agricultural pesticides, medical supplies, foods, cosmetics, daily necessities, detergents, and the like.
Among these, fragrance oil microcapsules used in biomaterials or medical supplies, food, cosmetics, detergents (for example, hair rinses, body washes, fabric softeners, and the like), and the like are particularly harmless to the human body, and also require that a capsule should be a biodegradable environmentally friendly product.
However, most of the existing methods include forming emulsion droplets using a surface-active polymer or nanoparticles as a fragrance oil, and condensationpolymerizing a resin such as melamine, formaldehyde, urea, urethane, or the like on surfaces of the emulsion fragrance droplets to form capsules. The fragrance capsule thus manufactured has excellent fragrance loading capacity and loading efficiency, but has environmental problems because the capsule is not decomposed after use.
To solve these problems, there are attempts to manufacture a microcapsule loaded with a fragrance oil using biopolymers (for example, gum arabic, starch, cellulose, gelatin, alginate, albumin, and the like) having biodegradability, and modified biopolymers (for example, CMC, HPMC, HPMC-AS, and the like).
However, the biopolymers have high softening characteristics compared to the above-described polymers such as melamine, formaldehyde, and the like, and may be swollen by water or a fragrance oil. Therefore, the biopolymers have drawbacks in that the loading capacity and loading stability of a fragrance may be severely deteriorated because primary particles aggregate during mass production of the microcapsule, or the microcapsule is easily collapsed by external stimuli such as compression.
Therefore, there is a demand for a manufacturing method capable of realizing superior aggregation stability and fragrance oil loading stability even when a biodegradable biopolymer is used, compared to the conventional biopolymers.

[Disclosure]

[Technical Problem]

An object of the present invention is to provide a method for manufacturing a microcapsule including a fragrance oil, wherein the microcapsule may stably load a fragrance oil even when a biodegradable biopolymer is used, and has improved loading stability because the collapse of the microcapsule is suppressed. Another object of the present invention is to provide a method for manufacturing a microcapsule including a fragrance oil, wherein the microcapsule loaded with the fragrance oil has a uniform shape, and has an enhanced distribution of individual primary particles because the aggregation of the microcapsule is suppressed.
Still another object of the present invention is to provide a microcapsule manufactured by the method for manufacturing a microcapsule including the fragrance oil, and a dispersion including the same.

[Technical Solution]

In one general aspect, a method for manufacturing a microcapsule including a fragrance oil includes: preparing a solution including a biodegradable polymer, a fragrance oil, and a first organic solvent; adding the solution to an aqueous solution comprising a dispersion stabilizing agent to prepare a mixed solution; emulsifying the mixed solution to prepare an emulsified solution in which the solution forms a dispersed phase and the aqueous solution forms a continuous phase; and stirring the emulsified solution under the conditions satisfying the following Expression 1 to remove the first organic solvent:

[Expression 1]

$$\varphi \left(\frac{\rho r^2 D^3}{\gamma}\right)^{-0.6} \left(\frac{\mu_d}{\mu_c}\right)^{0.25} \left(\frac{|T_e - T_b|}{T_b}\right)^{0.6} \times 10000 \leq 0.2$$

(wherein D represents a diameter (m) of a stirring system, r represents a stirring speed (turns/sec), $\gamma$ represents an interfacial tension (N/m) between a dispersed phase and a continuous phase, $\mu_d$ represents a viscosity (mPa.s) of the dispersed phase, $\mu_c$ represents a viscosity (mPa.s) of the continuous phase, $\rho$ represents a density (kg/m$^3$) of the continuous phase, $\varphi$ represents a volume fraction of the dispersed phase, $T_e$ represents a temperature (K) of the continuous phase, and $T_b$ represents a boiling point (K) of the first organic solvent at an atmospheric pressure).

According to an aspect of the present invention, the fragrance oil may have a partition coefficient (logP) of more than 3 which may include fragrance oil.

According to an aspect of the present invention, an evaporation temperature ($T_e$) of the first organic solvent may be a value lower than a boiling point ($T_b$) of the first organic solvent at an atmospheric pressure, which may include fragrance oil.

According to an aspect of the present invention, the dispersion stabilizing agent may be a water-soluble polymer.

According to an aspect of the present invention, the solution may further include a second organic solvent, and the second organic solvent may have a boiling point higher than the first organic solvent, which may include fragrance oil.

According to an aspect of the present invention, the second organic solvent may be included at 20% by weight or less, based on the weight of the first organic solvent.

According to an aspect of the present invention, the biodegradable polymer on a surface of the microcapsule may include an ether group or an ester group in the repeating unit, and an interfacial tension between the fragrance oil and water may be higher than an interfacial tension between the biodegradable polymer and water.

According to an aspect of the present invention, the dispersed phase may have a volume fraction of 30 to 50%, which may include fragrance oil.

According to an aspect of the present invention, the removing of the first organic solvent may be performed by removing the first organic solvent under reduced pressure, which may include fragrance oil.

In another general aspect, a fragrance oil-containing microcapsule includes a core including a fragrance oil and a shell containing a biodegradable polymer, wherein the microcapsule has a free flowing property in a dry state, and the microcapsule has controlled release characteristics with respect to the fragrance oil.

According to an aspect of the present invention, the biodegradable polymer may be an alkyl-substituted cellulose-based polymer or a lactic acid-based polymer.

According to an aspect of the present invention, the alkyl-substituted cellulose-based polymer may be ethyl cellulose (EC), and the lactic acid-based polymer may be poly(lactic acid) (PLA).

According to an aspect of the present invention, the microcapsule may have an average diameter of 3 to 30 $\mu$m.

According to an aspect of the present invention, the fragrance oil may be contained in 80% or more of the microcapsule when the microcapsule is pressurized at 10 mN for 30 seconds.

According to an aspect of the present invention, a enthalpy of fusion ($\Delta H_{mc}$) of the microcapsule per unit weight of the lactic acid-based polymer may be lower than a enthalpy of fusion ($\Delta H_p$) of lactic acid-based microparticles per unit weight of the lactic acid-based polymer.

According to an aspect of the present invention, the shell may further include a low-molecular-weight lactic acid-based polymer.

In still another general aspect, a fragrance oil-containing microcapsule dispersion includes the microcapsule, wherein the microcapsule is included so that primary particles are present at 80% by weight or more in an aqueous dispersion, based on the total weight of the microcapsule.

[Advantageous Effects]

The method for manufacturing a microcapsule including a fragrance oil according to the present invention has an advantage in that a fragrance oil-containing microcapsule having an increased distribution of individual primary particles can be formed because the aggregation of the primary particles is suppressed even when the microcapsule is manufactured in a large quantity.

Also, the fragrance oil-containing microcapsule manufactured by the manufacturing method according to the present invention has advantages in that it has a uniform shape and excellent surface characteristics, shows an excellent strain recovery force of a shape with respect to external pressure due to the high yield stress, and has improved fragrance oil loading stability because the collapse of the microcapsule is suppressed.

Further, the fragrance oil-containing microcapsule has advantages in that it has excellent fragrance diffusion ability through spreading and an excellent long-term fragrance diffusion-lasting effect due to the excellent fragrance oil loading stability.

[Description of Drawings]

FIG. 1 is a schematic diagram showing a method for manufacturing a microcapsule including a fragrance oil according to the present invention.

FIG. 2 shows scanning electron microscope (SEM) images (FIGS. 2A to 2D, respectively) of fragrance oil-containing microcapsules manufactured in Examples 1 and 2 and Comparative Examples 1 and 2 of the present invention.

FIG. 3 shows scanning electron microscope (SEM) images (FIGS. 3A and 3B, respectively) of the fragrance oil-containing microcapsule manufactured in Example 1 of the present invention after experiments are performed at room and elevated temperatures.

[Best Mode]

Hereinafter, the present invention will be described in further detail with reference to embodiments or examples thereof, which include the accompanying drawings. However, it should be understood that the following embodiments or examples are only illustrative to describe the present invention in detail, and the present invention is not limited thereto and may be implemented in various forms.

Also, unless defined otherwise, all technical and scientific terms used herein have the same meanings as commonly understood by one skilled in the art to which the present disclosure pertains. The terms used for description in the present invention are intended to effectively describe certain embodiments or examples, but are not intended to limit the present invention.

In addition, singular forms used in the specification and the appended claims are intended to include plural forms as well, unless otherwise specified in the context.

Further, throughout the specification describing the present invention, a certain part "including" a certain element signifies that the certain part may be further inclusive, instead of exclusive, of another element unless particularly indicated otherwise.

The term "particle" used in the present invention is used as a meaning including a "capsule", a "microcapsule", a "fragrance oil-containing microcapsule," and a "core-shell particle."

The terms "capsule", "microcapsule", "fragrance oil-containing microcapsule", and "core-shell particle" used in the present invention are used in the same meaning.

The terms "emulsified solution" and "emulsion" used in the present invention may be used in the same meaning.

The term "organic solvent" used in the present invention is used as a meaning including a "first organic solvent" and a "second organic solvent."

To achieve the above objects, the present invention provides a method for manufacturing a microcapsule including a fragrance oil, and a fragrance oil-containing microcapsule manufactured by the method.

The present inventors have deepened research on a fragrance oil-containing microcapsule which has biodegradability and in which formation of aggregated secondary particles is suppressed even due to its excellent fragrance oil loading stability and mass production. Therefore, the present inventors have realized the effect as described above by applying a manufacturing method which includes: mixing a solution including a biodegradable polymer, a fragrance oil, and a first organic solvent with an aqueous solution including a dispersion stabilizing agent to emulsify a mixed solution, and stirring the mixed solution under the conditions satisfying the following Expression 1 to remove the first organic solvent. Therefore, the present invention has been completed based on the finding.

Hereinafter, a method for manufacturing a microcapsule including a fragrance oil according to the present invention will be described in detail.

The method for manufacturing a microcapsule including a fragrance oil according to the present invention includes preparing a solution including a biodegradable polymer, a fragrance oil, and a first organic solvent; adding the solution to an aqueous solution including a dispersion stabilizing agent to prepare a mixed solution; emulsifying the mixed solution to prepare an emulsified solution in which the solution forms a dispersed phase and the aqueous solution forms a continuous phase; and stirring the emulsified solution under the conditions satisfying the following Expression 1 to remove the first organic solvent:

[Expression 1]

$$\varphi \left( \frac{\rho r^2 D^3}{\gamma} \right)^{-0.6} \left( \frac{\mu_d}{\mu_c} \right)^{0.25} \left( \frac{|T_e - T_b|}{T_b} \right)^{0.6} \times 10000 \leq 0.2$$

(wherein D represents a diameter (m) of a stirring system, r represents a stirring speed (turns/sec), $\gamma$ represents an interfacial tension (N/m) between a dispersed phase and a continuous phase, $\mu_d$ represents a viscosity (mPa.s) of the dispersed phase, $\mu_c$ represents a viscosity (mPa.s) of the continuous phase, $\rho$ represents a density (kg/m³) of the continuous phase, $\varphi$ represents a volume fraction of the dispersed phase, $T_e$ represents a temperature (K) of the continuous phase, and $T_b$ represents a boiling point (K) of the first organic solvent at an atmospheric pressure).

The preparing of the solution may be performed by mixing the biodegradable polymer, the fragrance oil, and the first organic solvent to prepare the solution, and the prepared solution may be in an oil phase.

The biodegradable polymer refers to a polymer that has a property of decomposing in an action of microorganisms, heat, moisture, or other environmental factors. Specifically, the biodegradable polymer may be an alkyl-substituted cellulose-based polymer or a lactic acid-based polymer, but the present invention is not limited thereto.

The alkyl-substituted cellulose-based polymer may refer to a polymer including a cellulose-based derivative unit substituted with an alkyl group. Specifically, the alkyl-substituted cellulose-based polymer may include at least one selected from the group consisting of methyl cellulose (MC), ethyl cellulose (EC), and a combination thereof. Preferably, the alkyl-substituted cellulose-based polymer may be ethyl cellulose (EC).

The lactic acid-based polymer refers to a polymer including lactic acid in the structural unit, and the lactic acid may be L-lactic acid, D-lactic acid, or a combination thereof. The lactic acid unit may be included at 50 mol% or more, particularly 60 mol% or more, and more particularly 70 mol% or more, based on 100 mol% of all the monomer components constituting the lactic acid-based polymer. A specific example of the lactic acid unit may be poly(lactic acid) (PLA) or poly(lactic-co-glycolic acid) (PLGA) .

A weight average molecular weight of the biodegradable polymer may be in a range of 30,000 to 1,000,000 g/mol, specifically in a range of 50,000 to 500,000 g/mol, and more specifically in a range of 100,000 to 300,000 g/mol.

The fragrance oil is not limited as long as it is a flavor component known in the art, but may be specifically any one or a mixture of two or more selected from natural or synthetic aromatic materials.

Specifically, the natural aromatic materials may include extracts from botanical raw materials such as extracts from flowers (lily, lavender, rose, jasmine, neroli, ylang-ylang), stems and leaves (geranium, patchouli, petitgrain), fruits (anise fruit, coriander, caraway, juniper), fruit peels (*Citrus junos,* Bergamot, lemon, orange peel oil), fruit seeds (*Citrus junos* seed oil), roots (mace, angelica, celery, cardamom, costus, iris, calamus), trees (pine tree, sandalwood, guaiacum wood, cedarwood, rosewood), medicinal herbs and grasses (tarragon, lemon grass, sage, thyme), coniferous trees and branches (spruce, pine tree, Scotch pine, mountain pine), resins and balsams (galbanum, elemi, benzoin, myrrh, olibanum, opoponax), and the like. Also, the natural aromatic materials may also include musk, castor, and the like from animal raw materials.

Specifically, the synthetic aromatic materials may include ester-, ether-, aldehyde-, ketone-, alcohol- or hydrocarbon-type products, and the like.

Specifically, the ester-type aromatic material compound may include benzyl acetate, phenoxy-ethyl isobutyrate, p-tert-butylcyclohexyl acetate, linalyl acetate, dimethyl-benzylcarbinyl acetate, phenylethyl acetate, linalyl benzoate, benzyl formate, ethylmethylphenyl glycinate, allylcyclohexyl propionate, styrallyl propionate, benzyl salicylate, and the like.

Specifically, the ether may include benzyl ethyl ether, and the like; the aldehyde may, for example, include linear alkanal, citral, citronellal, citronellyl oxyacetaldehyde, cyclamen aldehyde, hydroxycitronellal, lilial, bourgeonal, and the like, all of which have 8 to 18 hydrocarbon atoms; the ketone may, for example, include ionone, $\alpha$-isomethyl ionone, methyl cedryl ketone, and the like; the alcohol may, for example, include anethole, citronellol, eugenol, isoeugenol, geraniol, linalool, phenyl ethyl alcohol, terpinol, and the like; and the hydrocarbon may mainly include terpene and balsam.

The fragrance oil may also further include relatively low volatile ethereal oils, for example, sage oil, chamomile oil, clove oil, melissa oil, cinnamon leaves oil, lime flower oil, juniper fruit oil, vetiver oil, olibanum oil, galbanum oil, labolanum oil, lavandin oil, and the like.

The fragrance oil may have hydrophobicity, and may specifically have a partition coefficient (logP) of less than 1, and more specifically a partition coefficient (logP) of less than 3. Within the above range, it is desirable in that it is easy to form a core-shell-type microcapsule in which the fragrance oil of the dispersed phase is positioned in a core (in an inner part) and the biodegradable polymer is positioned in a shell (in an outer part) during an emulsification step as described below.

The first organic solvent is not limited as long as it is mixed with an aqueous solution as described below to form a dispersed phase and may dissolve the biodegradable polymer and the fragrance oil. However, an evaporation temperature ($T_e$) of the first organic solvent may specifically be a value lower than a boiling point ($T_b$) of the first organic solvent at an atmospheric pressure.

The first organic solvent may be selected from organic solvents having miscibility with water. Specifically, ether, benzene, chloroform, ethyl acetate, dichloromethane (DCM), and the like may be used alone or in combination. Preferably, dichloromethane (DCM) may be used.

In the oil-phase solution, the biodegradable polymer and the fragrance oil may be included at 1 to 30% by weight, and specifically included at 2 to 15% by weight, but the present invention is not limited thereto.

The biodegradable polymer and the fragrance oil may be included at a weight ratio of 1:1 to 4:1, and specifically included at a weight ratio of 1.3:1 to 2.5:1, but the present invention is not limited thereto.

According to an aspect of the present invention, the solution may further include a second organic solvent having miscibility with the first organic solvent, and the mixed organic solvent of the first organic solvent and the second organic solvent may be mixed with an aqueous solution as described below to form a dispersed phase. The second organic solvent may be selected from organic solvents which do not have miscibility with water. In this case, the second organic solvent may have a boiling point relatively higher than the first organic solvent.

When the solution further includes the second organic solvent, the first organic solvent may be included at 50% by volume, based on the total volume of the mixed organic solvent, and the second organic solvent may be included at 20% by weight or less, specifically 10% by weight or less, and more specifically 0.5 to 5% by weight or less, based on the weight of the first organic solvent, but the present invention is not limited thereto.

As described above, when the binary organic solvent in which the solution further includes the second organic solvent is used, a 2-step evaporation step may be performed according to the evaporation temperature in the step of removing the solvent as described below. Specifically, a rapid evaporation of the first organic solvent having an evaporation speed relatively more rapid than the second organic solvent is possible, followed by a slow evaporation of the second organic solvent. In this case, the microcapsule thus manufactured may have a uniform shape and a smooth surface. In particular, when two organic solvents having different boiling points are used, a biodegradable polymer film is first densified by evaporation of the first organic solvent having a lower boiling point at the interface coming into contact with water. Then, a phase separation between the biodegradable polymer and the fragrance oil occurs as the second organic solvent evaporates slowly. As a result, the fragrance oil may be stably positioned in the microcapsule core, and the biodegradable polymer may be phase-separated and densified in an interfacial direction coming into contact with water. Such a 2-step evaporation process may be favorable in that the microcapsule has improved yield stress, compared to a 1-step evaporation process.

According to an aspect of the present invention, the solution may further include an additional low-molecular-weight lactic acid-based polymer. A weight average molecular weight of the low-molecular-weight lactic acid-based polymer means that the molecular weight of the low-molecular-weight lactic acid-based polymer is lower than a weight average molecular weight of a lactic acid-based polymer that is a main component of the microcapsule. In this case, the average molecular weight of the low-molecular-weight lactic acid-based polymer is sufficient as long as the low-molecular-weight lactic acid-based polymer has a sufficient molecular weight to plasticize the lactic acid-based polymer. The weight average molecular weight of the low-molecular-weight lactic acid-based polymer may be specifically in a range of 1,000 to 30,000 g/mol, and more specifically in a range of 5,000 to 15,000 g/mol, but the present invention is not limited thereto. Lactic acid-based polymers chemically identical to the type of the above-described lactic acid-based polymer may be used as the low-molecular-weight lactic acid-based polymer. When the low-molecular-weight lactic acid-based polymer further includes a low-molecular-weight lactic acid-based polymer having a molecular weight within the above range, the shell of the manufactured microcapsule may be plasticized to have flexibility. Therefore, because the microcapsule has a further improved yield stress, the fragrance oil may be stably contained inside the microcapsule without destroying the microcapsule when microcapsule is pressurized, which is preferred.

The aqueous solution may refer to an aqueous-phase solution including a dispersion stabilizing agent and water, which may be mixed with a solution as described below to form a continuous phase. The dispersion stabilizing agent may mean a stabilizing agent that has such an amphiphilic characteristic so that it can disperse both hydrophobic and hydrophilic in order to improve the dispersibility of the microcapsule and manufacture a stable capsule. In this case, the dispersion stabilizing agent may be a water-soluble polymer.

The water-soluble polymer may specifically include any one or two or more selected from polyvinyl alcohol, polyvinyl methyl ether, polyacrylic acid, polyvinyl acetate, polyvinyl pyrrolidone, a copolymer of vinyl pyrrolidone and vinyl acetate, and the like. Preferably, polyvinyl alcohol (PVA) may be used.

The aqueous solution in an aqueous phase may include 0.1 to 10% by weight, specifically 1 to 5% by weight of the water-soluble polymer, based on the total weight of the aqueous solution, but the present invention is not limited thereto.

The emulsification step may be performed by adding the solution to the aqueous solution to prepare a mixed solution and emulsifying the mixed solution while stirring. The emulsification step may be performed at room temperature and an atmospheric pressure, and the stirring may be performed using a homo-mixer, an Agi-mixer, a paddle mixer, or the like known in the art. In this case, the stirring speed is not limited, but the stirring may be specifically performed under the condition of a stirring speed of 1,000 to 10,000 rpm.

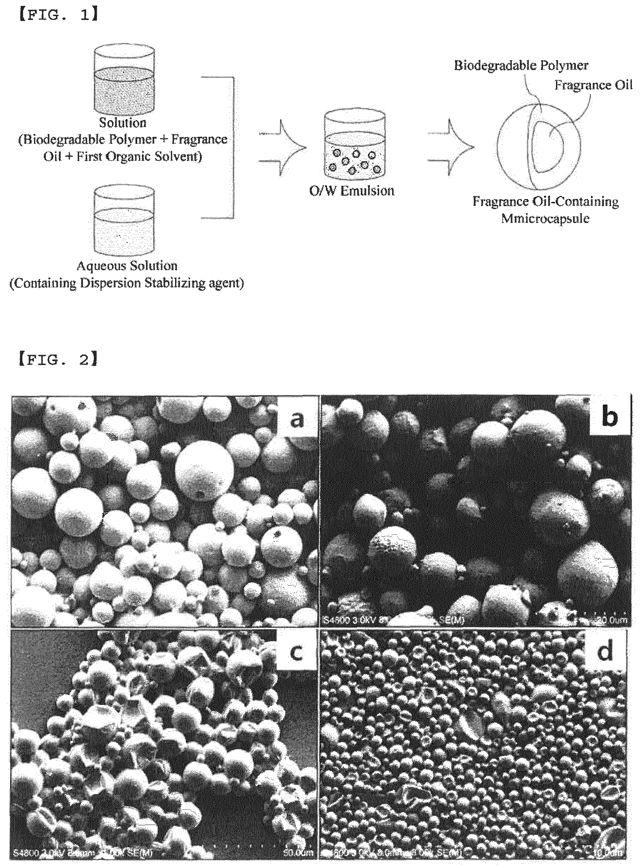

In this case, as shown in FIG. 1, the solution may form a dispersed phase and the aqueous solution may form a continuous phase to form an emulsified solution that is an oil-in-water (O/W) emulsion. The solution may be independently dispersed in a spherical particle shape, and the emulsified solution before being solidified in the form of a microcapsule may have a shape in which a solution is formed in a state the fragrance oil, the biodegradable polymer, and the organic solvent are uniformly distributed with each other.

In the emulsified solution, a volume fraction of the dispersed phase may be in a range of 10 to 80%, specifically in a range of 20 to 60%, and more specifically in a range of 30 to 50%, but the present invention is not limited thereto.

Next, the method according to the present invention includes a first organic solvent removal step of removing the first organic solvent from the emulsified solution in a uniform state before the emulsified solution is solidified in the form of a microcapsule to solidify the microcapsule. More specifically, in the emulsified solution in a uniform state, particles in which the fragrance oil is positioned inside and the biodegradable polymer is positioned outside are formed because the interfacial tension between the fragrance oil and water is higher than the interfacial tension between water and the biodegradable polymer including an ether group or an ester group in the repeating unit. When the first organic solvent is removed, a core-shell-type microcapsule in which the fragrance oil is positioned in the core and the biodegradable polymer forms a shell may be formed while solidifying the particles.

In this case, the removing of the first organic solvent may be performed while stirring under the conditions at which the value of the following Expression 1 may be less than or equal to 0.2, specifically less than or equal to 0.1, and more specifically less than or equal to 0.08.

[Expression 1]

$$\varphi \left( \frac{\rho r^2 D^3}{\gamma} \right)^{-0.6} \left( \frac{\mu_d}{\mu_c} \right)^{0.25} \left( \frac{|T_e - T_b|}{T_b} \right)^{0.6} \times 10000$$

(wherein D represents a diameter (m) of a stirring system, r represents a stirring speed (turns/sec), $\gamma$ represents an interfacial tension (N/m) between a dispersed phase and a continuous phase, $\mu_d$ represents a viscosity (mPa.s) of the dispersed phase, $\mu_c$ represents a viscosity (mPa.s) of the continuous phase, $\rho$ represents a density (kg/m³) of the continuous phase, $\varphi$ represents a volume fraction of the dispersed phase, $T_e$ represents a temperature (K) of the continuous phase, and $T_b$ represents a boiling point (K) of the first organic solvent at an atmospheric pressure).

Within the range satisfying the value of Expression 1, the first organic solvent may be removed to decrease a ratio of the aggregated secondary particles of the manufactured fragrance oil-containing microcapsule and increase a ratio of the individual primary particles. Also, the number of the microcapsule collapsed by pressurization such as external impact remarkably decreases, which is preferred.

A method for removing the first organic solvent is not limited. However, specifically, evaporation may be used, and, more specifically, an evaporation of the first organic solvent may be induced by heating the continuous phase. The evaporation may be performed at 30 to 50 °C , specifically 35 to 45 °C for 6 to 20 hours. However, the aggregation and collapse phenomena of the particles are suppressed under the above conditions, which is preferred, but the present invention is not limited thereto. Also, the evaporation may be performed under reduced pressure, and the first organic solvent may be evaporated within a short time under the above-described evaporation conditions. Thus, the manufactured particles have excellent surface characteristics, and the aggregation and collapse of the particles are suppressed, which may be preferred.

Hereinafter, the fragrance oil-containing microcapsule of the present invention manufactured by the method for manufacturing a microcapsule including fragrance oil as described above will be described in detail.

The fragrance oil-containing microcapsule according to the present invention includes a core including a fragrance oil and a shell containing a biodegradable polymer. In this case, the microcapsule has a free flowing property and excellent yield stress in a dry state, shows excellent long-term fragrance diffusion-lasting ability due to the excellent fragrance oil loading stability, and may have a characteristic of controlling the release of the fragrance oil.

The microcapsule does not aggregate, has an increased content of the independently existing primary particles, and may have a free flowing property in a dry state because the microcapsule having a uniform shape and excellent surface characteristics is obtained by the organic solvent removal step satisfying the above-described Expression 1.

The microcapsule may have an average diameter of 0.5 to 35 $\mu$m, specifically an average diameter of 3 to 30 $\mu$m.

The fragrance oil may be taken up inside 80% or more of the microcapsule when the microcapsule is pressurized at 10 mN for 30 seconds. This means that the microcapsule is not collapsed even by external impact, and still contains the fragrance oil.

The fragrance oil-containing microcapsule according to the present invention may have a enthalpy of fusion ($\Delta H_{mc}$) per unit weight of the lactic acid-based polymer lower than a enthalpy of fusion ($\Delta H_p$) of the lactic acid-based microparticles per unit weight of the lactic acid-based polymer. This is because the enthalpy of fusion ($\Delta H_{mc}$) of the microcapsule per unit weight of the lactic acid-based polymer may be lower than the enthalpy of fusion ($\Delta H_p$) of the lactic acid-based microparticles, which do not contain the fragrance oil, per unit weight of the lactic acid-based polymer because a portion of the shell is plasticized by the fragrance oil when the fragrance oil-containing microcapsule satisfies the requirements of Expression 1. More specifically, the microcapsule may have a value of less than 1, and more specifically a value of less than 0.7 as calculated by the following Expression 2.

$$[\text{Expression 2}]$$

$$\Delta H_{mc} / \Delta H_p$$

(wherein $\Delta H_{mc}$ represents a enthalpy of fusion of the microcapsule per unit weight of the lactic acid-based polymer included in the microcapsule, and $\Delta H_p$ represents a enthalpy of fusion of the lactic acid-based microparticles per unit weight of the lactic acid-based polymer).

Specifically, even when a biodegradable molecule of the shell is a polymer having high crystallinity, the shell has flexibility because the fragrance oil of the core serves as a plasticizing agent. Therefore, the microcapsule of the present invention has high yield stress, and thus may easily absorb external stress because the microcapsule may also endure repeated compression and recovery. More specifically, because the microcapsule may be recovered even when it is compressed to 30% of a diameter of the microcapsule, a small number of the microcapsules may be collapsed under the pressurization conditions such as external impact, and the like, which may be more preferred.

The fragrance oil-containing microcapsule of the present invention may be applied to various formulations, and may specifically include a powder form, a liquid-phase form, and the like, but the present invention is not limited thereto.

As a preferred aspect, the fragrance oil-containing microcapsule may be applied in the form of a dispersion. The dispersion may be an aqueous dispersion, and the primary particles may be present at 80% by weight or more in the aqueous dispersion, based on the total weight of the microcapsule.

Specifically, the method for manufacturing a microcapsule including a fragrance oil according to the present invention may be desirable because it may increase an amount of production of the primary particles which do not aggregate during mass production, is environmentally friendly because the biodegradable polymer is used, and does not generate residual microplastics.

Also, the manufactured microcapsule may be desirable because it has excellent surface characteristics, a portion of the biodegradable polymer in the shell is plasticized by the fragrance oil of the core, and it shows flexible characteristics and has excellent yield stress characteristics because it does not easily collapse by external impact.

Further, due to the above characteristics, it suggests that the microcapsule may be applied various fields such as flavors, biomaterials, agricultural pesticides, medical supplies, foods, cosmetics, daily necessities, detergents, and the like because the microcapsule has a free flowing property and controlled release characteristics with respect to the fragrance oil.

Hereinafter, the present invention will be described in further detail with reference to Examples and Comparative Examples thereof. However, it should be understood that the following Examples and Comparative Examples are illustrative only to describe the present invention in detail, but are not intended to limit the present invention.

[Experimental Method]

1: Compression Test

To measure a compressive load applied to a microcapsule, a cantilever-type load cell (LVS-5GA/Kyowa) having a maximum capacity of 50 mN was used, and the microcapsule was compressed using a linear stage (PSV-X40D/Piezo-tech) having a resolution of 0.5 $\mu$m, by which can control the micro-displacement. After the compression, five images of the microcapsule were taken at different positions using an electron microscope to calculate a ratio of the collapsed microcapsule.

[Preparation Example]

a) First step of separating a natural *Citrus junos* fragrance oil raw material from a *Citrus junos* peel extract

10 kg of cleanly washed natural *Citrus junos* was put into a peeling machine including plastic cylinders having a rough surface, which was equipped with a device capable of spraying distilled water at room temperature and an atmospheric pressure, and the distilled water was sprayed while rotating the peeling machine. In a process of roughly treating a surface of *Citrus junos,* the surface of *Citrus junos* was peeled off to obtain 5 kg of a *Citrus junos* peel extract containing a natural *Citrus junos* fragrance oil in distilled water.
Next, the *Citrus junos* peel extract was put into a separatory funnel, and 1% NaCl was then added thereto based on the weight of the obtained *Citrus junos* peel extract, and the resulting mixture was uniformly mixed. The mixture was kept stationary until a natural *Citrus junos* fragrance oil solution and an aqueous solution were phase-separated. Thereafter, a supernatant portion (i. e., an oil layer) was separated from the separatory funnel to obtain 150 g of a natural *Citrus junos* fragrance oil raw material (crude).

b) Second step of removing acidified materials to obtain pure *Citrus junos* essential oil

20 g of the natural *Citrus junos* fragrance oil raw material (crude) thus obtained was taken, and an ionic liquid (5% 1-butyl-3-methylimidazorium bis(trifluoromethyl sulfonyl)imide) was added to the samples, based on the weight of the *Citrus junos* fragrance oil raw material. Then, each of the samples was put into a distillatory apparatus equipped with a rotary vacuum evaporator, and then concentrated by vacuum rotation under the conditions of a vacuum pressure of 760 Torr and a temperature of 50°C, until an amount of the added sample decreased to 90% (on the basis of weight), to collect the pure *Citrus junos* essential oil from which acidified materials included in the *Citrus junos* fragrance oil raw material (crude) were removed.

[Example 1]

6 g of poly(lactic acid) (molecular weight: 180,000 g/mol) and 4 g of the *Citrus junos* essential oil manufactured in Preparation Example were completely dissolved in 80 g of a dichloromethane solvent ($T_b$ = 39.7 °C) using a stirrer to prepare a solution as an oil phase having a viscosity of 63 mPa.s.
2 g of polyvinyl alcohol (molecular weight: 80,000 g/mol) was dissolved in 100 g of distilled water to prepare an aqueous solution.
80 mL of the prepared solution and 100 mL of the aqueous solution were mixed, and emulsified for 5 minutes under the condition of a speed of 2,000 rpm using a homo-mixer (diameter: 0.25 m) to prepare an emulsified solution in which the solution formed a dispersed phase and the aqueous solution formed a continuous phase.
The prepared emulsified solution was stirred at 40 °C and a speed of 300 rpm for 12 hours under reduced pressure, and further stirred at 30 °C for an hour to completely remove the dichloromethane solvent.
Next, the emulsified solution was washed with distilled water, filtered, and dried in a vacuum drying oven to obtain a core-shell-type fragrance oil-containing microcapsule as a white powder.

[Example 2]

A fragrance oil-containing microcapsule was manufactured in the same manner as in Example 1, except that the emulsified solution in Example 1 was stirred at a speed of 600 rpm to remove the dichloromethane solvent.

[Example 3]

A fragrance oil-containing microcapsule was manufactured in the same manner as in Example 1, except that 8 g of poly (lactic acid) in Example 1 was used to prepare an oil-phase solution having a viscosity of 90 mPa.s.

[Example 4]

A fragrance oil-containing microcapsule was manufactured in the same manner as in Example 1, except that 40 mL of the solution and 100 mL of the aqueous solution in Example 1 were mixed and used.

[Example 5]

A fragrance oil-containing microcapsule was manufactured in the same manner as in Example 1, except that the emulsified solution in Example 1 was stirred at 36 °C and a speed of 900 rpm to remove the dichloromethane solvent.

[Example 6]

A fragrance oil-containing microcapsule was manufactured in the same manner as in Example 1, except that a mixed solvent obtained by mixing 75 g of the dichloromethane solvent ($T_b$ = 39.7 °C ) and 5 g of the chloroform solvent in Example 1 was used, and the emulsified solution was stirred at 40 °C for 24 hours, and then stirred at 30 °C for an hour to remove the mixed solvent.

[Example 7]

A fragrance oil-containing microcapsule was manufactured in the same manner as in Example 1, except that 4 g of poly(lactic acid) having a weight average molecular weight of 180,000 g/mol and 0.2 g of poly(lactic acid) having a weight average molecular weight of 12,000 g/mol in Example 1 were mixed, and an oil-phase solution having a viscosity of 45 mPa.s was used.

[Example 8]

A fragrance oil-containing microcapsule was manufactured in the same manner as in Example 1, except that ethyl cellulose (ETHOCEL™ Standard 4 from The Dow Chemical Company) was used instead of the poly(lactic acid) in Example 1, and an oil-phase solution having a viscosity of 87 mPa.s was used.

[Comparative Example 1]

A fragrance oil-containing microcapsule was manufactured in the same manner as in Example 1, except that the emulsified solution in Example 1 was stirred at room temperature (25 °C ) for 24 hours to remove the dichloromethane solvent.

[Comparative Example 2]

A fragrance oil-containing microcapsule was manufactured in the same manner as in Example 1, except that the emulsified solution in Example 1 was stirred at 50°C for 12 hours to remove the dichloromethane solvent.

[Comparative Example 3]

A fragrance oil-containing microcapsule was manufactured in the same manner as in Example 1, except that 0.4 g of sodium alginate (W201502 from Sigma-Aldrich) was dissolved in 100 g of distilled water in Example 1 to prepare an aqueous solution.

[Comparative Example 4]

A fragrance oil-containing microcapsule was manufactured in the same manner as in Example 1, except that 2.2 g of the poly(lactic acid) in Example 1 was used to prepare an oil-phase solution having a viscosity of 27 mPa.s, and the emulsified solution was stirred at 20 °C for 48 hours to remove the dichloromethane solvent.

[Comparative Example 5]

A fragrance oil-containing microcapsule was manufactured in the same manner as in Example 1, except that 20 mL of the solution and 100 mL of the aqueous solution in Example 1 were mixed and used, and the emulsified solution was stirred at 35 °C and a speed of 60 rpm to remove the dichloromethane solvent.

The Expression 1 values and average particle sizes of the fragrance oil-containing microcapsules manufactured in Examples and Comparative Examples are listed in Table 1 below.

[Table 1]

| | Examples | | | | | | | | Comparative Examples | | | |
|---|---|---|---|---|---|---|---|---|---|---|---|---|
| | 1 | 2 | 3 | 4 | 5 | 6 | 7 | 8 | 1 | 2 | 3 | 4 |
| $\varphi$ | 0.44 | 0.44 | 0.44 | 0.28 | 0.44 | 0.44 | 0.44 | 0.44 | 0.44 | 0.44 | 0.44 | 0.44 |
| $\rho$ (kg/m$^3$) | 1023 | 1023 | 1023 | 1023 | 1023 | 1023 | 1023 | 1023 | 1023 | 1023 | 1005 | 1023 |
| r (turns/sec) | 5 | 10 | 5 | 5 | 15 | 5 | 5 | 5 | 5 | 5 | 5 | 5 |
| D (m) | 0.25 | 0.25 | 0.25 | 0.25 | 0.25 | 0.25 | 0.25 | 0.25 | 0.25 | 0.25 | 0.25 | 0.25 |
| $\gamma$ (N/m) | 0.0018 | 0.0018 | 0.0018 | 0.0018 | 0.0018 | 0.0018 | 0.0018 | 0.0018 | 0.0018 | 0.0018 | 0.042 | 0.0018 |
| $\mu_d$ (mPa.s) | 63 | 63 | 90 | 63 | 63 | 63 | 45 | 87 | 63 | 63 | 63 | 27 |
| $\mu_c$ (mPa.s) | 16 | 16 | 16 | 16 | 16 | 16 | 16 | 16 | 16 | 16 | 16 | 16 |
| $T_e$ (K) | 313 | 313 | 313 | 313 | 309 | 313 | 313 | 313 | 297 | 323 | 313 | 293 |
| $T_b$ (K) | 312.7 | 312.7 | 312.7 | 312.7 | 312.7 | 312.7 | 312.7 | 312.7 | 312 .7 | 312.7 | 312.7 | 312.7 |
| Equation 1 | 0.060 | 0.026 | 0.066 | 0.039 | 0.072 | 0.060 | 0.055 | 0.065 | 0.645 | 0.501 | 0.401 | 0.598 |
| Average particle size ($\mu$m) | 8 | 8.2 | 15.2 | 7.3 | 12.8 | 9.2 | 6.5 | 17.2 | 6.5 | 10.4 | 11.2 | 8.5 |

[Expression 1]

$$\rho \left( \frac{\rho r^2 D^3}{\gamma} \right)^{-0.6} \left( \frac{\mu_d}{\mu_c} \right)^{0.25} \left( \frac{|T_e - T_b|}{T_b} \right)^{0.6} \times 10000$$

(wherein D represents a diameter (m) of a stirring system, r represents a stirring speed (turns/sec), $\gamma$ represents an interfacial tension (N/m) between a dispersed phase and a continuous phase, $\mu_d$ represents a viscosity (mPa.s) of the dispersed phase, $\mu_c$ represents a viscosity (mPa.s) of the continuous phase, $\rho$ represents a density (kg/m$^3$) of the continuous phase, $\varphi$ represents a volume fraction of the dispersed phase, $T_e$ represents a temperature (K) of the continuous phase, and $T_b$ represents a boiling point (K) of the first organic solvent at an atmospheric pressure).

The characteristics of the fragrance oil-containing microcapsules of Examples and Comparative Examples were evaluated, as follows.

[Experimental Example 1] Evaluation of surface characteristics and fragrance oil release characteristics of fragrance oil-containing microcapsules

SEM images of the fragrance oil-containing microcapsules manufactured in Examples 1 and 2 after an experiment was performed at room temperature are shown in FIGS. 2A and 2B, respectively, and SEM images of the fragrance oil-containing microcapsules manufactured in Comparative Examples 1 and 2 after an experiment was performed at room temperature are shown in FIGS. 2C and 2D, respectively.

As shown in FIGS. 2A and 2B, it can be seen that the fragrance oil-containing microcapsules according to Examples 1 and 2 of the present invention had no dented surface and had smooth and uniform characteristics, unlike the fragrance oil-containing microcapsules according to Comparative Examples 1 and 2 as shown in FIGS. 2B and 2C.

[Experimental Example 2] Evaluation of fragrance oil release characteristics of fragrance oil-containing microcapsule

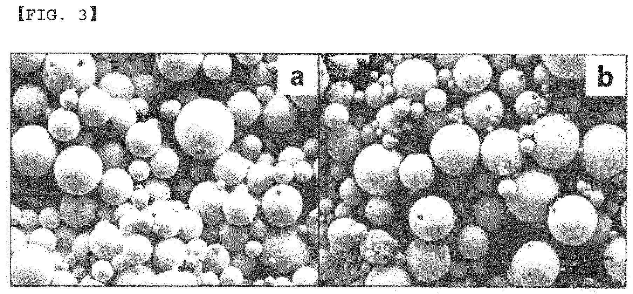

An SEM image of the fragrance oil-containing microcapsule manufactured in Example 1 after an experiment was performed at room temperature is shown in FIG. 3A, and an SEM image of the fragrance oil-containing microcapsule manufactured in Example 1 after an experiment was performed at 50°C for 24 hours is shown in FIG. 3B. As shown in FIG. 3B, it can be seen that a shape of the fragrance oil-containing microcapsule of Example 1 was maintained even after the elapse of 24 hours under the condition of a temperature of 50°C, indicating that the rapid release of the fragrance oil according to the external conditions was suppressed, and the fragrance oil was released in a sustained manner.

[Experimental Example 3] Evaluation of aggregation characteristics and compression characteristics of fragrance oil-containing microcapsules

Five images of each of the microcapsules manufactured in Examples were taken at different positions using an electron microscope, and the number of aggregated microcapsules among a total of 100 microcapsules per position was added up and averaged. The results are listed in Table 2 below. Also, each of the microcapsules manufactured in Examples was compressed at 10 mN for 30 seconds, five images of each of the microcapsules were taken at different positions using an electron microscope, and the number of collapsed microcapsules among a total of 100 microcapsules per position was added up and averaged. The results are listed in Table 2 below.

[Table 2]

| Items | Average number of aggregated particles | Before compression | After compression |
|---|---|---|---|
| Example 1 | 7 | 100 | 94 |
| Example 2 | 5 | 100 | 96 |
| Example 3 | 6 | 100 | 92 |
| Example 4 | 4 | 100 | 95 |
| Example 5 | 5 | 100 | 91 |
| Example 6 | 3 | 100 | 99 |
| Example 7 | 4 | 100 | 99 |

(continued)

| Items | Average number of aggregated particles | Before compression | After compression |
|---|---|---|---|
| Example 8 | 10 | 100 | 87 |
| Comparative Example 1 | 22 | 86 | 56 |
| Comparative Example 2 | 16 | 88 | 42 |
| Comparative Example 3 | 27 | 86 | 41 |
| Comparative Example 4 | 31 | 87 | 38 |
| Comparative Example 5 | 33 | 82 | 34 |

As listed in Table 2, it can be seen that there was almost no change in the number of the microcapsules before and after the compression in the case of Examples 1 to 7, whereas approximately 35% or more of the microcapsules were collapsed after the compression in the case of Comparative Examples 1 to 5. This indicates that the fragrance oil-containing microcapsules manufactured by the manufacturing method of the present invention had high yield stress, and thus had a high strain recovery rate with respect to the external impact and improved resistance to fracture.

That is, as shown in FIGS. 2 and 3 and listed in Table 2, it can be seen that, in the case of Examples 1 to 8 according to an aspect of the present invention manufactured under the requirements satisfying Expression 1 as listed in Table 1, the manufactured fragrance oil-containing microcapsules had a uniform particle size, and had excellent surface characteristics because they had a smooth surface with the spherical particles having no shape deformation. Also, it can be seen that the rapid release of the fragrance oil was suppressed and the release of the fragrance oil was continuously sustained because the fragrance oil-containing microcapsules had excellent fragrance oil loading stability even under the external harsh conditions such as high temperature, external force, and the like. Further, it can be seen that the fragrance oil-containing microcapsules were not easily collapsed by the external impact because the flexibility and yield stress of the fragrance oil-containing microcapsules increased as the shell (i. e., a biodegradable polymer) was partially plasticized by the fragrance oil positioned in a core region of each of the microcapsules. This indicates that the fragrance oil-containing microcapsules have further improved fragrance diffusion performance because they may be more stably loaded with the fragrance oil and may release the fragrance oil for a long time.

Although the present invention has been described with reference to certain subject matters and limited examples thereof, and the accompanying drawings, it should be understood that the subject matters and the limited examples are merely provided to aid in understanding the present invention more comprehensively, but are not intended to limit the present invention. Therefore, it will be apparent to those skilled in the art to which the present invention belongs that various changes and modifications can be made from such description.

Thus, the scope of the present invention is not intended to be limited to the examples described herein, and thus all types of the appended claims, and equivalents or equivalent modifications thereof fall within the scope of the present invention.

## Claims

1. A method for manufacturing a microcapsule comprising a fragrance oil, comprising:

preparing a solution comprising a biodegradable polymer, a fragrance oil, and a first organic solvent;
adding the solution to an aqueous solution comprising a dispersion stabilizing agent to prepare a mixed solution;
emulsifying the mixed solution to prepare an emulsified solution in which the solution forms a dispersed phase and the aqueous solution forms a continuous phase; and
stirring the emulsified solution under the conditions satisfying the following Expression 1 to remove the first organic solvent:

[Expression 1]

$$\varphi \left( \frac{\rho r^2 D^3}{\gamma} \right)^{-0.6} \left( \frac{\mu_d}{\mu_c} \right)^{0.25} \left( \frac{|T_e - T_b|}{T_b} \right)^{0.6} \times 10000 \leq 0.2$$

(wherein D represents a diameter (m) of a stirring system, r represents a stirring speed (turns/sec), $\gamma$ represents an interfacial tension (N/m) between a dispersed phase and a continuous phase, $\mu_d$ represents a viscosity (mPa.s) of the dispersed phase, $\mu_c$ represents a viscosity (mPa.s) of the continuous phase, $\rho$ represents a density (kg/m$^3$) of the continuous phase, $\varphi$ represents a volume fraction of the dispersed phase, $T_e$ represents a temperature (K) of the continuous phase, and $T_b$ represents a boiling point (K) of the first organic solvent at an atmospheric pressure).

2. The method of claim 1, wherein the fragrance oil has a partition coefficient (logP) of more than 3.

3. The method of claim 1, wherein an evaporation temperature ($T_e$) of the first organic solvent is a value lower than a boiling point ($T_b$) of the first organic solvent at an atmospheric pressure.

4. The method of claim 1, wherein the dispersion stabilizing agent is a water-soluble polymer.

5. The method of claim 1, wherein the solution further comprises a second organic solvent, and the second organic solvent has a boiling point higher than the first organic solvent.

6. The method of claim 5, wherein the second organic solvent is included at 20% by weight or less, based on the weight of the first organic solvent.

7. The method of claim 1, wherein the biodegradable polymer on a surface of the microcapsule includes an ether group or an ester group in the repeating unit, and an interfacial tension between the fragrance oil and water is higher than an interfacial tension between the biodegradable polymer and water.

8. The method of claim 1, wherein the dispersed phase has a volume fraction of 30 to 50%.

9. The method of claim 1, wherein the removing of the first organic solvent is performed by removing the first organic solvent under reduced pressure.

10. A fragrance oil-containing microcapsule comprising:

    a core comprising a fragrance oil; and
    a shell containing a biodegradable polymer,
    wherein the fragrance oil-containing microcapsule has a free flowing property in a dry state, and
    the microcapsule has controlled release characteristics with respect to the fragrance oil.

11. The fragrance oil-containing microcapsule of claim 10, wherein the biodegradable polymer is an alkyl-substituted cellulose-based polymer or a lactic acid-based polymer.

12. The fragrance oil-containing microcapsule of claim 11, wherein the alkyl-substituted cellulose-based polymer is ethyl cellulose (EC), and the lactic acid-based polymer is poly(lactic acid) (PLA).

13. The fragrance oil-containing microcapsule of claim 10, wherein the microcapsule has an average diameter of 3 to 30 $\mu$m.

14. The fragrance oil-containing microcapsule of claim 10, wherein the fragrance oil is contained inside 80% or more of the microcapsule when the microcapsule is pressurized at 10 mN for 30 seconds.

**15.** The fragrance oil-containing microcapsule of claim 10, wherein a enthalpy of fusion ($\Delta H_{mc}$) of the microcapsule per unit weight of the lactic acid-based polymer is lower than a enthalpy of fusion ($\Delta H_p$) of lactic acid-based microparticles per unit weight of the lactic acid-based polymer.

**16.** The fragrance oil-containing microcapsule of claim 10, wherein the shell further comprises a low-molecular-weight lactic acid-based polymer.

**17.** A fragrance oil-containing microcapsule dispersion comprising the microcapsule defined in claim 10, wherein the microcapsule is included so that primary particles are present at 80% by weight or more in an aqueous dispersion, based on the total weight of the microcapsule.

【FIG. 1】

【FIG. 2】

【FIG. 3】

## INTERNATIONAL SEARCH REPORT

| | International application No. |
|---|---|
| | **PCT/KR2020/014882** |

### A. CLASSIFICATION OF SUBJECT MATTER

**B01J 13/04**(2006.01)i; **B01F 17/00**(2006.01)i

According to International Patent Classification (IPC) or to both national classification and IPC

### B. FIELDS SEARCHED

Minimum documentation searched (classification system followed by classification symbols)

B01J 13/04(2006.01); A01N 25/28(2006.01); A23L 1/00(2006.01); A23L 1/22(2006.01); A61K 8/11(2006.01); A61K 9/50(2006.01); B01J 13/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 생분해성 고분자(biodegradable polymer), 캡슐(capsule), 오일(oil), 향기(scent), 용매(solvent)

### C. DOCUMENTS CONSIDERED TO BE RELEVANT

| Category* | Citation of document, with indication, where appropriate, of the relevant passages | Relevant to claim No. |
|---|---|---|
| Y | KR 10-2010-0120731 A (HANBUL COSMETICS CO., LTD.) 17 November 2010 (2010-11-17)<br>See claim 1; and paragraphs [0029]-[0052]. | 10-17 |
| A | | 1-9 |
| Y | WO 93-19622 A2 (TASTEMAKER) 14 October 1993 (1993-10-14)<br>See claims 1-6; and pages 8-10. | 10-17 |
| A | JP 11-342329 A (KAO CORP.) 14 December 1999 (1999-12-14)<br>See entire document. | 1-17 |
| A | US 6861064 B1 (LAAKSO, T. et al.) 01 March 2005 (2005-03-01)<br>See entire document. | 1-17 |
| A | KR 10-2003-0077867 A (THE KOREA APINSA et al.) 04 October 2003 (2003-10-04)<br>See entire document. | 1-17 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 May 2021** | **04 May 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2020/014882**

| Patent document cited in search report | | | Publication date (day/month/year) | Patent family member(s) | | | Publication date (day/month/year) |
|---|---|---|---|---|---|---|---|
| KR | 10-2010-0120731 | A | 17 November 2010 | KR | 10-0457251 | B1 | 16 November 2004 |
| WO | 93-19622 | A2 | 14 October 1993 | AT | 128607 | T | 15 October 1995 |
| | | | | AT | 129855 | T | 15 November 1995 |
| | | | | AU | 3969893 | A | 08 November 1993 |
| | | | | AU | 3971493 | A | 08 November 1993 |
| | | | | AU | 5534096 | A | 30 October 1996 |
| | | | | AU | 669166 | B2 | 30 May 1996 |
| | | | | AU | 669167 | B2 | 30 May 1996 |
| | | | | AU | 711849 | B2 | 21 October 1999 |
| | | | | BR | 9306153 | A | 30 June 1998 |
| | | | | BR | 9306169 | A | 13 January 1998 |
| | | | | CA | 2130442 | A1 | 14 October 1993 |
| | | | | CA | 2130442 | C | 23 December 1997 |
| | | | | CA | 2131302 | A1 | 14 October 1993 |
| | | | | CA | 2131302 | C | 14 October 1993 |
| | | | | CA | 2216742 | A1 | 17 October 1996 |
| | | | | CA | 2216742 | C | 04 June 2002 |
| | | | | CZ | 226794 | A3 | 14 June 1995 |
| | | | | CZ | 236594 | A3 | 17 May 1995 |
| | | | | CZ | 282380 | B6 | 16 July 1997 |
| | | | | CZ | 286118 | B6 | 12 January 2000 |
| | | | | DE | 69300590 | T2 | 23 May 1996 |
| | | | | DE | 69300590 | T3 | 11 October 2001 |
| | | | | DE | 69300768 | T2 | 05 June 1996 |
| | | | | DE | 69300768 | T3 | 14 September 2000 |
| | | | | DE | 69619104 | T2 | 19 September 2002 |
| | | | | DK | 0633732 | T3 | 26 February 1996 |
| | | | | DK | 0633732 | T4 | 17 April 2000 |
| | | | | DK | 0633733 | T3 | 04 December 1995 |
| | | | | DK | 0633733 | T4 | 17 April 2000 |
| | | | | EP | 0633732 | A1 | 18 January 1995 |
| | | | | EP | 0633732 | B1 | 08 November 1995 |
| | | | | EP | 0633732 | B2 | 12 January 2000 |
| | | | | EP | 0633733 | A1 | 18 January 1995 |
| | | | | EP | 0633733 | B1 | 04 October 1995 |
| | | | | EP | 0633733 | B2 | 29 December 1999 |
| | | | | EP | 0820233 | A1 | 28 January 1998 |
| | | | | EP | 0820233 | B1 | 06 February 2002 |
| | | | | ES | 2080616 | T3 | 01 February 1996 |
| | | | | ES | 2080616 | T5 | 01 April 2000 |
| | | | | ES | 2081214 | T3 | 16 February 1996 |
| | | | | ES | 2081214 | T5 | 01 May 2000 |
| | | | | ES | 2170230 | T3 | 01 August 2002 |
| | | | | FI | 944517 | A | 29 September 1994 |
| | | | | FI | 944518 | A | 29 September 1994 |
| | | | | JP | 07-508164 | A | 14 September 1995 |
| | | | | JP | 08-501441 | A | 20 February 1996 |
| | | | | JP | 11-504510 | A | 27 April 1999 |
| | | | | JP | 3054443 | B2 | 19 June 2000 |
| | | | | JP | 3213319 | B2 | 02 October 2001 |

Form PCT/ISA/210 (patent family annex) (July 2019)

**INTERNATIONAL SEARCH REPORT**
Information on patent family members

International application No.

**PCT/KR2020/014882**

| Patent document cited in search report | | | Publication date (day/month/year) | Patent family member(s) | | | Publication date (day/month/year) |
|---|---|---|---|---|---|---|---|
| | | | | KR | 10-0220500 | B1 | 15 September 1999 |
| | | | | KR | 10-0220501 | B1 | 15 September 1999 |
| | | | | KR | 10-0416458 | B1 | 20 May 2004 |
| | | | | KR | 10-1995-0700689 | A | 20 February 1995 |
| | | | | KR | 10-1995-0700690 | A | 20 February 1995 |
| | | | | KR | 10-1998-0703833 | A | 05 December 1998 |
| | | | | MX | 9707853 | A | 29 November 1997 |
| | | | | NZ | 251818 | A | 28 May 1996 |
| | | | | NZ | 251827 | A | 28 May 1996 |
| | | | | RO | 116336 | B1 | 30 January 2001 |
| | | | | RO | 116337 | B1 | 30 January 2001 |
| | | | | RU | 2089076 | C1 | 10 September 1997 |
| | | | | RU | 2089077 | C1 | 10 September 1997 |
| | | | | RU | 94044444 | A | 10 November 1996 |
| | | | | RU | 94045815 | A | 10 October 1996 |
| | | | | SK | 114994 | A3 | 05 January 1995 |
| | | | | SK | 116794 | A3 | 07 June 1995 |
| | | | | SK | 281186 | B6 | 18 January 2001 |
| | | | | SK | 281384 | B6 | 12 March 2001 |
| | | | | UA | 26867 | C2 | 29 December 1999 |
| | | | | UA | 26868 | C2 | 29 December 1999 |
| | | | | US | 5536513 | A | 16 July 1996 |
| | | | | US | 5759599 | A | 02 June 1998 |
| | | | | WO | 93-19621 | A3 | 25 November 1993 |
| | | | | WO | 93-19622 | A3 | 25 November 1993 |
| | | | | WO | 96-32017 | A1 | 17 October 1996 |
| JP | 11-342329 | A | 14 December 1999 | JP | 4208208 | B2 | 14 January 2009 |
| US | 6861064 | B1 | 01 March 2005 | AT | 249813 | T | 15 October 2003 |
| | | | | AU | 732891 | B2 | 03 May 2001 |
| | | | | AU | 9467098 | A | 10 May 1999 |
| | | | | CA | 2306824 | A1 | 29 April 1999 |
| | | | | CA | 2306824 | C | 08 January 2008 |
| | | | | CZ | 20001352 | A3 | 11 October 2000 |
| | | | | CZ | 299100 | B6 | 23 April 2008 |
| | | | | DE | 69818295 | T2 | 08 July 2004 |
| | | | | DK | 1033973 | T3 | 02 February 2004 |
| | | | | EP | 1033973 | A1 | 13 September 2000 |
| | | | | EP | 1033973 | B1 | 17 September 2003 |
| | | | | ES | 2205551 | T3 | 01 May 2004 |
| | | | | HK | 1029931 | A1 | 20 April 2001 |
| | | | | HU | 0004732 | A2 | 28 May 2001 |
| | | | | HU | 0004732 | A3 | 28 December 2001 |
| | | | | HU | 224008 | B1 | 28 April 2005 |
| | | | | IL | 135733 | A | 20 November 2005 |
| | | | | JP | 2001-520186 | A | 30 October 2001 |
| | | | | KR | 10-0572711 | B1 | 24 April 2006 |
| | | | | KR | 10-2001-0031289 | A | 16 April 2001 |
| | | | | NO | 20002039 | L | 13 June 2000 |
| | | | | NO | 310177 | B1 | 05 June 2001 |
| | | | | PT | 1033973 | E | 27 February 2004 |

Form PCT/ISA/210 (patent family annex) (July 2019)

**INTERNATIONAL SEARCH REPORT**
Information on patent family members

International application No.

**PCT/KR2020/014882**

| Patent document cited in search report | Publication date (day/month/year) | Patent family member(s) | | | Publication date (day/month/year) |
|---|---|---|---|---|---|
| | | SE | 512663 | C2 | 17 April 2000 |
| | | SE | 9703874 | L | 24 April 1999 |
| | | WO | 99-20253 | A1 | 29 April 1999 |
| | | ZA | 989199 | B | 15 April 1999 |
| KR 10-2003-0077867 A | 04 October 2003 | KR | 10-0457251 | B1 | 16 November 2004 |

Form PCT/ISA/210 (patent family annex) (July 2019)